# FASCICULE DE BREVET EUROPEEN

(11) **EP 3 912 536 B1**
(45) Date de publication et mention de la délivrance du brevet: **24.09.2025**
(21) Numéro de dépôt: 21172219.4
(22) Date de dépôt: 05.05.2021
(51) Int. Cl.: A47J 43/044, A47J 31/44

(54) **MACHINE DE PREPARATION DE BOISSONS EQUIPEE D'UNE TETE DE DISTRIBUTION DE FLUIDE MOBILE EN TRANSLATION**
MASCHINE ZUR GETRÄNKEZUBEREITUNG, DIE MIT EINEM SEITLICH VERSCHIEBBAREN AUSGABEKOPF VERSEHEN IST
BEVERAGE PREPARATION MACHINE EQUIPPED WITH A TRANSLATABLY MOBILE FLUID DISPENSING HEAD

(30) Priorité: 18.05.2020 FR 2004957
(43) Date de publication de la demande: 24.11.2021
(73) Titulaire: SEB S.A., 69130 Ecully (FR)
(72) Inventeur: MORIN, Gilles, 69290 POLLIONNAY (FR)
(74) Mandataire: SEB Développement

(56) Documents cités:
- EP-A1- 3 395 212
- EP-A1- 3 574 809
- EP-B1- 2 245 970
- US-A1- 2019 008 311

## Description

### Domaine technique

La présente invention concerne une machine de préparation de boissons équipée d'une tête de distribution qui est mobile en translation verticale à l'extérieur d'un bâti de la machine et qui est alimentée en fluide à distribuer, notamment de l'eau chaude ou de la vapeur, depuis l'intérieur du bâti.

### Etat de la technique

Traditionnellement, une telle machine de préparation de boissons comprend un bâti et une tête de distribution qui est mobile en translation verticale à l'extérieur du bâti et qui est alimentée en fluide à distribuer depuis un réservoir, en passant par un circuit de distribution et de chauffe agencé à l'intérieur du bâti. Ce fluide peut être par exemple de l'eau chaude, de la vapeur, voire de la boisson qui aura été préalablement préparée à l'intérieur de la machine. Afin de translater verticalement la tête de distribution, un dispositif de guidage est agencé à l'intérieur du bâti, ledit bâti comprenant une fente verticale à travers de laquelle se déplace verticalement un élément de liaison reliant le dispositif de guidage à la tête de distribution. Cette fente est agencée sur une paroi de façade du bâti devant laquelle est placée ladite tête de distribution. L'élément de liaison comprend un conduit de transfert du fluide pour alimenter en fluide la tête de distribution depuis l'intérieur du bâti. A titre d'exemple, la demande de brevet EP2245970B1 décrit une telle machine. Selon cette demande de brevet EP2245970B1, le dispositif de guidage comprend une colonne de guidage et un coulisseau auquel est relié l'élément de liaison, le coulisseau coulissant verticalement vis-à-vis de la colonne de guidage pour déplacer verticalement l'élément de liaison passant à travers la fente.

Cette mise en œuvre de la machine de préparation de boissons décrite dans la demande de brevet EP2245970B1 et, en général, les machines de préparation de boissons similaires présentent pour inconvénient majeur de permettre l'accès aux différents organes situés à l'intérieur du bâti, notamment les organes électriques, depuis la fente qui constitue une fenêtre de passage. Cela peut être dangereux pour l'utilisateur, risquant une électrocution, et entraîner des disfonctionnements de la machine de préparation de boissons en cas de projection d'un liquide en direction de la fente sur le bâti ou au cas où un article serait glissé à l'intérieur du bâti en passant par cette fente, par exemple un enfant inconscient du danger qui glisserait des petites pièces d'un jeu et chercherait à les récupérer avec une lame de couteau. En outre, la présence de cette fente, laissant apparaître les organes à l'intérieur du bâti, n'est pas esthétique sur la machine.

### Exposé de l'invention

L'invention a pour objectif de pallier les inconvénients précités. A cet effet, l'invention concerne une machine de préparation de boissons selon la revendication 1. La machine de préparation de boisson comporte une tête de distribution et un bâti à l'intérieur duquel est agencé un dispositif de guidage en translation de la tête de distribution qui est agencée à l'extérieur du bâti. Le bâti comporte une paroi de façade munie d'une fente qui s'étend selon la direction verticale et à travers laquelle s'étend un élément de liaison reliant la tête de distribution au dispositif de guidage. Le dispositif de guidage comporte une colonne de guidage et un coulisseau auquel est relié l'élément de liaison qui comporte un conduit de transfert d'un fluide, par exemple de l'eau froide ou chaude, de la vapeur ou de la boisson préalablement préparée à l'intérieur du bâti. Ainsi, la tête de distribution placée devant la paroi de façade du bâti peut se déplacer le long de la fente verticale tout en étant alimentée en fluide depuis l'intérieur du bâti.

Les termes colonne de guidage et coulisseau doivent être interprétés au sens large. Il peut en effet s'agir, en tant que tel, d'une colonne qui reçoit un coulisseau monté glissant le long de ladite colonne. Il peut toutefois s'agir aussi de tout montage en liaison glissière entre une première pièce de guidage et une seconde pièce coulissante, la seconde pièce coulissante étant reliée à l'élément de liaison.

De manière remarquable, la machine de préparation de boissons comprend une paroi écran agencée de manière parallèle à la paroi de façade et en vis-à-vis de la fente. En outre, le coulisseau est mobile entre la paroi écran et la paroi de façade. Ainsi, selon l'invention, la présence de la paroi écran placée derrière la fente sur la paroi de façade, à l'intérieur du bâti, empêche l'accès physiquement et visuellement aux différents organes de la machine placés à l'intérieur dudit bâti, la machine continuant à assurer le guidage vertical de la tête de distribution et son alimentation en fluide depuis l'intérieur du bâti, malgré la présence de cette paroi écran.

Selon l'invention, la colonne de guidage est placée derrière la fente et comporte la paroi écran. Ainsi, la paroi écran est directement réalisée grâce à la colonne de guidage qui assure le coulissement du coulisseau le long de la fente, la partie du coulisseau reliée à l'élément de liaison étant placée entre la paroi écran et la paroi de façade. Cette conception présente pour avantage de réduire le nombre de pièces pour la mise en oeuvre de cette paroi écran. Bien entendu, des variantes ne faisant pas partie de l'invention sont envisageables avec une paroi écran mise en oeuvre indépendamment de la colonne de guidage, par exemple en ajoutant une plaque s'étendant verticalement derrière la fente, au moins la partie du coulisseau reliée à l'élément de liaison étant positionnée et se déplaçant verticalement entre cette plaque et la paroi de façade.

Selon la machine de préparation de boissons objet de l'invention, la paroi écran est agencée à une distance D de la paroi de façade, la distance D étant inférieure à vingt millimètres (20mm), de préférence inférieure à dix millimètres (10mm). Selon une réalisation préférentielle, cette distance D entre la paroi écran et la paroi de façade sera comprise entre quatre et dix millimètres (4mm<D<10mm), idéalement six millimètres (D=6mm).

Selon la machine de préparation de boissons objet de l'invention, dans une section transversale, la paroi écran présente une largeur L1 et, en outre, la fente de la paroi de façade présente une largeur L2, la largeur L1 étant supérieure à la largeur L2. Selon une réalisation, la largeur L1 est supérieure à la largeur L2 d'au moins dix millimètres (10mm), de préférence de quinze millimètres (15mm).

Selon la machine de préparation de boissons objet de l'invention, la paroi écran et la paroi de façade comportent un plan de symétrie vertical. Cela permet de bloquer de manière identique l'accès à l'intérieur du bâti par les deux côtés latéraux de la fente.

Selon une réalisation de la machine de préparation de boissons objet de l'invention, le coulisseau comporte une section transversale interne ajustée à une section transversale externe de la colonne de guidage. En d'autres termes, la colonne de guidage passe au travers du coulisseau qui coulisse ainsi verticalement le long de cette colonne de guidage, le montage coulissant entre la colonne de guidage et le coulisseau étant ajusté. Cela évite le blocage du coulisseau par arc-boutement lors de son déplacement le long de la colonne de guidage.

Selon une réalisation de la machine de préparation de boissons objet de l'invention, la colonne de guidage comporte une section transversale présentant une portion en demi-cercle. Ainsi, la colonne de guidage présente une face plane s'étendant verticalement, cette face plane constituant la paroi écran lorsque la colonne de guidage est placée derrière la fente, selon un mode de réalisation tel que précité. Cette section transversale en demi-cercle permet également de bloquer la rotation du coulisseau selon un axe de rotation vertical, lorsque cette colonne de guidage reçoit le coulisseau de manière ajustée. Ce blocage en rotation permet avantageusement d'empêcher les frottements de l'élément de liaison sur l'un ou l'autre des bords latéraux de la fente durant les déplacements verticaux dudit élément de liaison le long de ladite fente. Bien entendu, cela peut être obtenu différemment en mettant en œuvre d'autres moyens de montage en liaison glissière dans le sens vertical entre la colonne de guidage et le coulisseau, selon leurs conceptions.

Selon une réalisation de la machine de préparation de boissons objet de l'invention, le conduit de transfert de fluide comprend une portion qui est agencée sur le coulisseau, en partie supérieure de celui-ci. Cela permet d'empêcher l'accès à cette portion du conduit de transfert du fluide depuis la fente sur la paroi de façade.

Selon une réalisation de la machine de préparation de boissons objet de l'invention, le conduit de transfert de fluide comporte une portion souple disposée à l'intérieur du bâti. Cela permet de déplacer librement le coulisseau auquel sont assujettis l'élément de liaison et le conduit de transfert de fluide.

Selon une réalisation de la machine de préparation de boissons objet de l'invention, le bâti comprend une semelle, la colonne de guidage étant directement issue de la semelle. En d'autres termes, la semelle et la colonne de guidage forment un élément monobloc. Cette mise en œuvre permet de réduire le coût de fabrication de la machine de préparation de boisson.

Selon une réalisation de la machine de préparation de boissons objet de l'invention, la tête de distribution comporte un dispositif d'agitation rotatif comprenant un outil rotatif autour d'un axe Z2 et destiné à agiter une préparation contenue dans un récipient et un conduit d'acheminement d'eau chaude et/ou de vapeur vers l'outil rotatif, le conduit d'acheminement d'eau chaude et/ou de vapeur étant raccordé au conduit de transfert de fluide. Bien entendu, des variantes de machine de préparation de boissons sont envisageables avec une tête de distribution sans un tel dispositif d'agitation rotatif.

### Brève description des figures

Les caractéristiques et avantages de l'invention apparaîtront à la lecture de la description suivante s'appuyant sur des figures, parmi lesquelles :
[Fig. 1] La figure 1 illustre une mise en œuvre d'une machine de préparation de boissons avec la tête de distribution placée en position haute vis-à-vis de la fente ;
[Fig. 2] La figure 2 illustre la machine de préparation de boissons de la figure 1 avec la tête de distribution placée en position basse vis-à-vis de la fente ;
[Fig. 3] La figure 3 illustre la machine de préparation de boissons des figures 1 et 2, avec une partie du bâti retirée afin de mettre en évidence les organes de cette machine et, notamment, la colonne de guidage et le coulisseau ;
[Fig. 4] La figure 4 illustre une vue en coupe de côté de la machine de préparation de boissons des figures 1 à 3, mettant notamment en évidence la conception de la tête de distribution ;
[Fig. 5] La figure 5 illustre une vue en coupe de dessus de la machine de préparation de boissons des figures 1 à 4, mettant en évidence la section transversale de la colonne de guidage et du coulisseau, ainsi que l'espacement entre la paroi écran et la paroi de façade.

### Description détaillée de l'invention

Dans la suite de la description, sauf indication, le terme machine est utilisé pour désigner la machine de préparation de boissons objet de l'invention.

Les termes « supérieur », « inférieur », « haut », « bas », « avant », « arrière », « latéral », « vertical », « horizontal », qui pourraient être utilisés dans la présente description, le seront en considération de la position normale des éléments de la machine placée dans une configuration fonctionnelle, face à l'utilisateur sur une table ou un plan de cuisine.

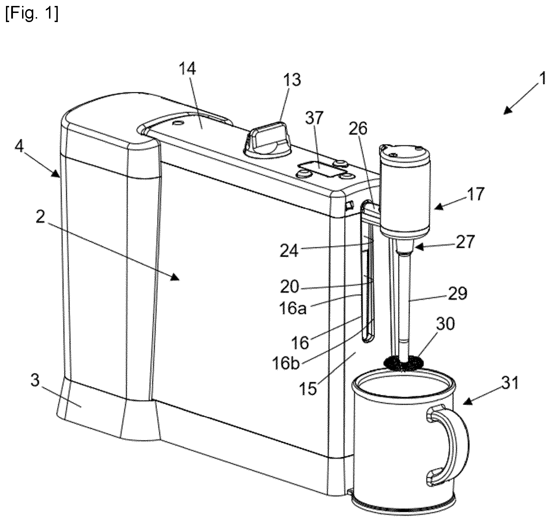

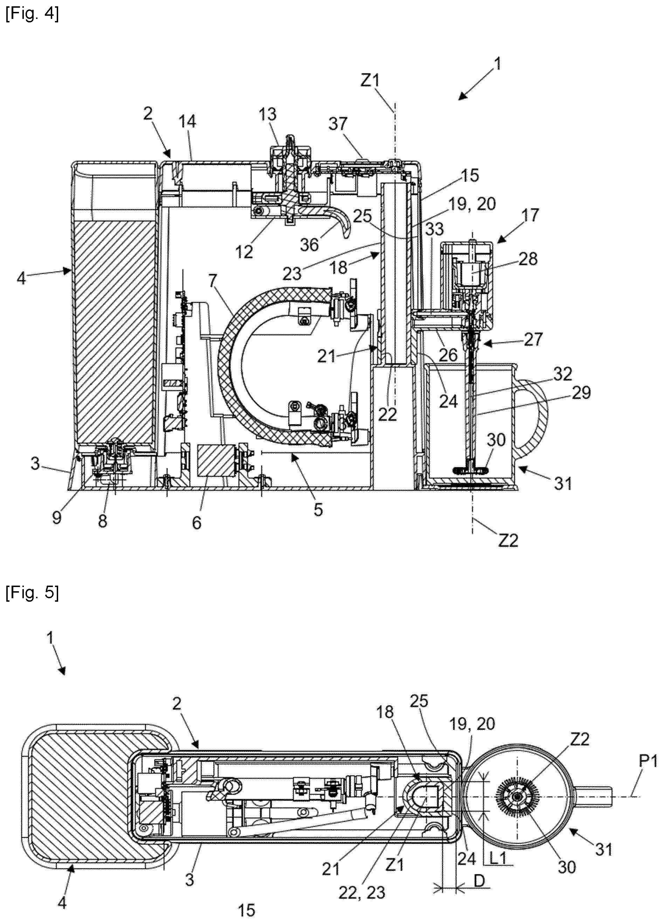

En regard des figures 1 à 5, la machine 1 comprend un bâti 2 muni d'une semelle 3 qui est destinée à être posée sur un plan horizontal, notamment un plan de table ou de cuisine. La machine 1 comprend également un réservoir 4 permettant de contenir de l'eau servant à la préparation de boissons, ce réservoir 4 étant amovible de la semelle 3 pour faciliter son remplissage en eau. La machine 1 comprend un circuit de distribution 5 en eau chaude et/ou en vapeur qui comprend notamment une pompe de circulation 6, du type pompe à piston basse pression, un organe de chauffe 7 du type bitube résistif, un premier tuyau 8 (illustré partiellement en figure 4) raccordant le réservoir 4 - par l'intermédiaire d'un système de valve 9 - à la pompe de circulation 6, un second tuyau 10 raccordant la pompe de circulation 6 à l'organe de chauffe 7 et, un troisième tuyau 11 raccordant l'organe de chauffe 7 à une vanne 12 commandée par un sélecteur 13 agencé sur une paroi supérieure 14 du bâti 2.

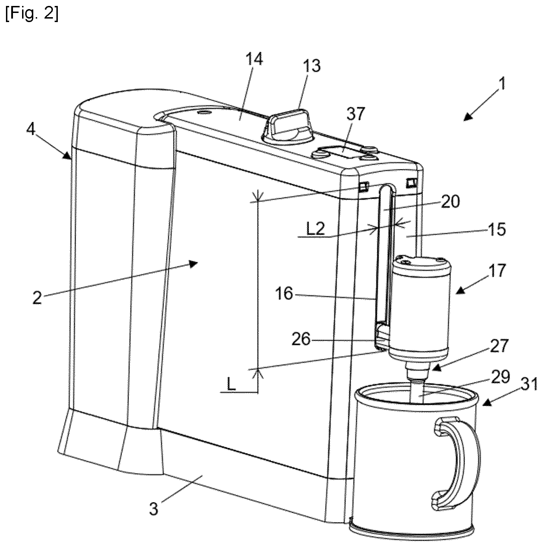

En regard des figures 1 à 5, le bâti 2 comprend une paroi de façade 15 qui est munie d'une fente 16 s'étendant verticalement, de préférence sur une longueur L comprise entre cent millimètres (100mm) et cent-cinquante millimètres (150mm). La machine 1 comprend une tête de distribution 17 qui est disposée à l'extérieur du bâti 2, devant la paroi de façade 15. A l'intérieur du bâti 2 est agencée une colonne de guidage 18 qui s'étend verticalement en hauteur derrière la fente 16 et présente une section en coupe transversale présentant une forme en demi-cercle, comme le montre la figure 5. Ainsi, la colonne de guidage 18 comprend une face plane 19 qui constitue une paroi écran 20 disposée parallèlement à la paroi de façade 15, derrière la fente 16. La paroi écran 20 et la fente 16 présentent un plan de symétrie vertical P1 illustré en figure 5, la largeur L1 (illustrée figure 5) de la paroi écran 20 étant supérieure à la largeur L2 (illustrée figure 2) de la fente 16. De préférence la largeur L1 est supérieure à la largeur L2 d'au moins dix millimètres (L1-L2=10mm), de préférence de quinze millimètres (L1-L2=15mm). En outre, la paroi écran 20 est espacée de la paroi de façade 15 d'une distance D qui est inférieure à vingt millimètres (D<20mm), de préférence inférieure de dix millimètres (D<10mm). De préférence, cette distance D sera comprise entre quatre et dix millimètres (4mm<D<10mm), de préférence égale à six millimètres (D=6mm). De préférence, la colonne de guidage 18 et la semelle 7 sont mise en œuvre en une pièce monobloc. Un coulisseau 21 présente également une section en coupe transversale qui a une forme en demi-cercle, comme le montre la figure 5, le contour interne 22 du coulisseau 21 étant ajusté au contour externe 23 de la colonne de guidage 18 qui reçoit de manière coulissante ledit coulisseau 21, ladite forme en demi-cercle assurant un blocage en rotation du coulisseau 21 autour de la colonne de guidage 18. Ainsi, le coulisseau 21 est monté en liaison glissière selon un axe vertical Z1 vis-à-vis de la colonne de guidage 18, la paroi avant 24 du coulisseau 21 étant positionnée entre la paroi écran 20 de la colonne de guidage 18 et la face interne 25 de la paroi de façade 15. La paroi avant 24 du coulisseau 21 est assujettie à la tête de distribution 17 grâce à un élément de liaison 26 qui s'étend vers l'avant par rapport à ladite paroi avant 24 et passe à travers la fente 16. Ainsi, la tête de distribution 17 peut se déplacer le long de la fente 16, d'une position haute illustrée en figure 1 jusqu'à une position basse illustrée en figure 2, et inversement, la course de ladite tête de distribution 17 correspondant à la longueur L de la fente 16. Quelle que soit la position de l'élément de liaison 26 le long de la fente 16, celle-ci est obstruée par la paroi écran 20 qui bloque l'accès à l'intérieur du bâti 2. Le montage en liaison glissière mis en œuvre entre la colonne de guidage 18 et le coulisseau 21 bloque la rotation de ce coulisseau 21 et donc de l'élément de liaison 26, ce qui évite que cet élément de liaison 26 frotte sur les bords latéraux 16a, 16b de la fente 16.

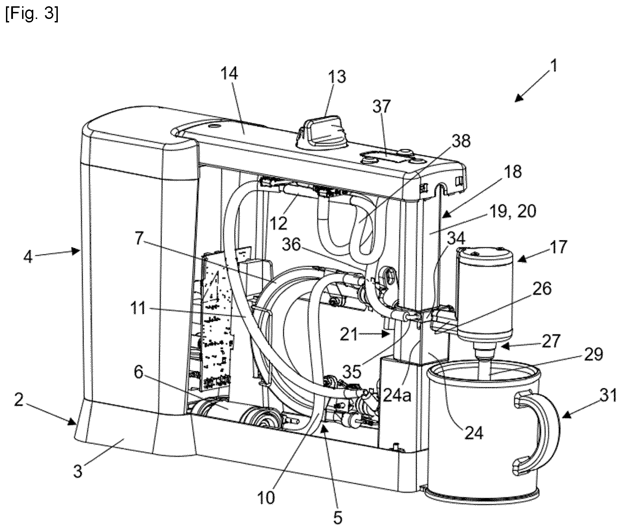

En regard des figures 3 et 4, la tête de distribution 17 comporte un dispositif d'agitation rotatif 27 qui comprend un moteur électrique 28 entraînant en rotation selon un axe vertical Z2 un arbre d'entraînement 29 à l'extrémité inférieure duquel est monté un outil rotatif 30 destiné à agiter une préparation contenue dans un récipient 31. Cet arbre d'entraînement 29 est creux, ce qui permet la constitution d'un conduit d'acheminement 32 en eau chaude et/ou en vapeur vers l'outil rotatif 30. L'élément de liaison 26 comporte un conduit de transfert 33 qui est raccordé en aval au conduit d'acheminement 32. Ce conduit de transfert 33 s'étend vers l'arrière dans la partie supérieure 34 de la paroi avant 24 du coulisseau 21 et comprend un embout 35 débouchant sur un côté latéral 24a de cette paroi avant 24. Le positionnement de cet embout 35 sur le côté latéral 24a de la paroi avant 24, dans sa partie supérieure 34, empêche l'accès à celui-ci depuis la fente 16. Le conduit de transfert 33 comprend un tuyau souple 36 qui a son extrémité avant raccordée à l'embout 35 et qui prolonge ledit conduit de transfert 33 à l'intérieur du bâti 2. Ce tuyau souple 36 a son extrémité arrière raccordée à la vanne 12 actionnée par le sélecteur 13 ; selon la position du sélecteur 13, le tuyau souple 36 sera alimenté ou non en eau chaude et/ou en vapeur. Ce tuyau souple 36 est dimensionné en longueur pour assurer un déplacement sans retenue du coulisseau 21 le long de la colonne de guidage 18.

Lors d'une préparation d'une boisson, le récipient 31 est placé sous la tête de distribution 17 qui se situe dans la position haute de la figure 1, puis ladite tête de distribution 17 est déplacée jusque dans la position basse de la figure 2 de manière à plongé l'outil rotatif 30 et le conduit d'acheminement 32 dans ledit récipient 31. Un programme de préparation est ensuite lancé sur la machine grâce à un clavier de sélection 37 et au sélecteur 13 agencés sur la paroi supérieure 14 du bâti 2, ce qui va permettre la distribution d'eau chaude et/ou de vapeur dans le récipient 31 et/ou l'agitation du contenu du récipient 31 au moyen de l'outil rotatif 30.

La machine 1 pourra comporter des caractéristiques additionnelles, notamment une douchette (non illustrée) qui sera alimentée en eau chaude par le circuit de distribution 5 au moyen d'un tuyau d'alimentation 38 qui est raccordé sur la vanne 12, laquelle laissera passer de l'eau chaude dans ledit tuyau d'alimentation 38 selon la position du sélecteur 13. Cette douchette sera agencée au-dessus d'un porte-filtre (non illustré), lui-même agencé au-dessus d'une verseuse (non illustrée) qui reposera sur un socle (non illustré) agencé sur la semelle 3. On pourrait aussi envisager une variante de machine 1 sur laquelle la boisson serait préparée à l'intérieur du bâti 2 et distribuée dans le récipient 31 par une tête de distribution 17 comportant une simple buse de distribution (non illustrée).

Des variantes de conception de la machine 1 sont également envisageables dans le cadre de l'invention. Par exemple, le guidage en liaison glissière du coulisseau 21 afin de déplacer l'élément de liaison 26 et la tête de distribution 17 le long de la fente 16 pourra être mis en œuvre en agençant des rainures en forme de T (non illustrées) sur les côtés latéraux de la colonne de guidage 18 et des pattes en forme de T (non illustrées) sur les côtés latéraux du coulisseau 21, les pattes en T étant montées en liaison glissière dans les rainures en T. Selon une autre variante ne faisant pas partie de l'invention, la colonne de guidage 18 pourrait être agencée de manière décalée par rapport à ladite fente 16, à l'intérieur du bâti 2. La paroi écran 20 pourra être mise en œuvre de manière indépendante de la colonne de guidage 18, en ajoutant une plaque (non illustrée) de largeur L1 qui s'étend verticalement à l'arrière de la fente 16, ladite plaque étant espacée de la distance D par rapport à la face interne 25 de la paroi de façade 15.

## Revendications

1. Machine de préparation de boissons (1) comportant une tête de distribution (17) et un bâti (2) à l'intérieur duquel est agencé un dispositif de guidage en translation de la tête de distribution qui est agencée à l'extérieur du bâti, ledit bâti comportant une paroi de façade (15) munie d'une fente (16) qui s'étend selon la direction verticale et à travers laquelle s'étend un élément de liaison (26) reliant la tête de distribution au dispositif de guidage, le dispositif de guidage comportant une colonne de guidage (18) et un coulisseau (21) auquel est relié l'élément de liaison (26) qui comporte un conduit de transfert de fluide (33), la machine de préparation de boissons (1) comprenant une paroi écran (20) agencée de manière parallèle à la paroi de façade (15) et en vis-à-vis de la fente (16) et le coulisseau (21) étant mobile entre la paroi écran (20) et la paroi de façade (15), **caractérisée en ce que** la colonne de guidage (18) est placée derrière la fente (16) et comporte la paroi écran (20) qui est agencée à une distance D de la paroi de façade (15), la distance D étant inférieure à vingt millimètres (20mm), de préférence inférieure de dix millimètres (10mm) pour empêcher l'accès physiquement et visuellement aux différents organes de la machine placés à l'intérieur dudit bâti.

2. Machine de préparation de boissons (1) selon la revendication 1, **caractérisée en ce que**, dans une section transversale, la paroi écran (20) présente une largeur L1 et **en ce que** la fente (16) de la paroi de façade (15) présente une largeur L2, la largeur L1 étant supérieure à la largeur L2.

3. Machine de préparation de boissons (1) selon la revendication 2, **caractérisée en ce que** la largeur L1 est supérieure à la largeur L2 d'au moins 10 millimètres (10mm).

4. Machine de préparation de boissons (1) selon l'une quelconque des revendications 1 à 3, **caractérisée en ce que** la paroi écran (20) et la paroi de façade (15) comportent un plan de symétrie vertical (P1).

5. Machine de préparation de boissons (1) selon l'une quelconque des revendications 1 à 4, **caractérisée en ce que** le coulisseau (21) comporte une section transversale interne ajustée à une section transversale externe de la colonne de guidage (18).

6. Machine de préparation de boissons (1) selon l'une quelconque des revendications 1 à 5, **caractérisée en ce que** la colonne de guidage (18) comporte une section transversale présentant une portion en demi-cercle.

7. Machine de préparation de boissons (1) selon l'une quelconque des revendications 1 à 6, **caractérisée en ce que** le conduit de transfert de fluide (33) comprend une portion qui est agencée sur le coulisseau (21), en partie supérieure de celui-ci.

8. Machine de préparation de boissons (1) selon l'une quelconque des revendications 1 à 7, **caractérisée en ce que** le conduit de transfert de fluide (33) comporte une portion souple agencée à l'intérieur du bâti (2).

9. Machine de préparation de boissons (1) selon l'une quelconque des revendications 1 à 8, **caractérisée en ce que** le bâti (2) comprend une semelle (3), la colonne de guidage (18) étant directement issue de la semelle (3).

10. Machine de préparation de boissons (1) selon l'une quelconque des revendications 1 à 9, **caractérisée en ce que** la tête de distribution (17) comporte un dispositif d'agitation rotatif (27) comprenant un outil rotatif (30) autour d'un axe (Z2) et destiné à agiter une préparation contenue dans un récipient (31) et un conduit d'acheminement (32) d'eau chaude et/ou de vapeur vers l'outil rotatif (30), ledit conduit d'acheminement (32) d'eau chaude et/ou de vapeur étant raccordé au conduit de transfert de fluide (33).

## Patentansprüche

1. Getränkezubereitungsmaschine (1), die einen Ausgabekopf (17) und ein Gestell (2) umfasst, in dessen Innerem eine Vorrichtung zur translatorischen Führung des Ausgabekopfes angeordnet ist, die außerhalb des Gestells angeordnet ist, wobei das Gestell eine mit einem sich in vertikaler Richtung erstreckenden Schlitz (16) versehene Vorderwand (15) aufweist, durch die sich ein Verbindungselement (26) erstreckt, das den Ausgabekopf mit der Führungsvorrichtung verbindet, wobei die Führungsvorrichtung eine Führungssäule (18) und einen Schieber (21) umfasst, mit dem das Verbindungselement (26) verbunden ist, das eine Fluidübertragungsleitung (33) umfasst, wobei die Getränkezubereitungsmaschine (1) eine Abschirmwand (20) umfasst, die parallel zu der Fassadenwand (15) angeordnet ist und dem Schlitz (16) gegenüberliegt, und wobei der Schieber (21) zwischen der Abschirmwand (20) und der Fassadenwand (15) beweglich ist, **dadurch gekennzeichnet, dass** die Führungssäule (18) hinter dem Schlitz (16) angeordnet ist und die Abschirmwand (20) aufweist, die in einem Abstand D von der Fassadenwand (15) angeordnet ist, wobei der Abstand D kleiner als zwanzig Millimeter (20 mm), vorzugsweise kleiner als zehn Millimeter (10 mm) ist, um den physischen und visuellen Zugang zu den verschiedenen, im Inneren des Gestells angeordneten Maschinenteilen zu verhindern.

2. Getränkezubereitungsmaschine (1) nach Anspruch 1, **dadurch gekennzeichnet, dass** in einem Querschnitt die Abschirmwand (20) eine Breite L1 aufweist und dass der Schlitz (16) der Fassadenwand (15) eine Breite L2 aufweist, wobei die Breite L1 größer als die Breite L2 ist.

3. Getränkezubereitungsmaschine (1) nach Anspruch 2, **dadurch gekennzeichnet, dass** die Breite L1 um mindestens 10 Millimeter (10 mm) größer ist als die Breite L2.

4. Getränkezubereitungsmaschine (1) nach einem der Ansprüche 1 bis 3, **dadurch gekennzeichnet, dass** die Abschirmwand (20) und die Fassadenwand (15) eine vertikale Symmetrieebene (P1) aufweisen.

5. Getränkezubereitungsmaschine (1) nach einem der Ansprüche 1 bis 4, **dadurch gekennzeichnet, dass** der Schieber (21) einen inneren Querschnitt aufweist, der an einen äußeren Querschnitt der Führungssäule (18) angepasst ist.

6. Getränkezubereitungsmaschine (1) nach einem der Ansprüche 1 bis 5, **dadurch gekennzeichnet, dass** die Führungssäule (18) einen Querschnitt aufweist, der einen halbkreisförmigen Abschnitt darstellt.

7. Getränkezubereitungsmaschine (1) nach einem der Ansprüche 1 bis 6, **dadurch gekennzeichnet, dass** die Fluidübertragungsleitung (33) einen Abschnitt umfasst, der auf dem Schieber (21) an dessen oberem Teil angeordnet ist.

8. Getränkezubereitungsmaschine (1) nach einem der Ansprüche 1 bis 7, **dadurch gekennzeichnet, dass** die Fluidübertragungsleitung (33) einen flexiblen Abschnitt aufweist, der im Inneren des Gestells (2) angeordnet ist.

9. Getränkezubereitungsmaschine (1) nach einem der Ansprüche 1 bis 8, **dadurch gekennzeichnet, dass** das Gestell (2) eine Sohle (3) umfasst, wobei die Führungssäule (18) direkt aus der Sohle (3) hervorgeht.

10. Getränkezubereitungsmaschine (1) nach einem der Ansprüche 1 bis 9, **dadurch gekennzeichnet, dass** der Ausgabekopf (17) eine rotierende Rührvorrichtung (27) aufweist, die ein um eine Achse (Z2) rotierendes Werkzeug (30) umfasst und dazu bestimmt ist, eine in einem Behälter (31) enthaltene Zubereitung zu rühren, sowie eine Leitung (32) zum Zuführen von heißem Wasser und/oder Dampf zum rotierenden Werkzeug (30), wobei die Zuführleitung (32) für heißes Wasser und/oder Dampf mit der Fluidübertragungsleitung (33) verbunden ist.

## Claims

1. Beverage preparation machine (1) comprising a dispensing head (17) and a frame (2) inside which a device for translatably guiding the dispensing head is arranged, which is arranged outside of the frame, said frame comprising a front wall (15) provided with a slot (16) which extends along the vertical direction and through which a connecting element (26) extends, connecting the dispensing head to the guiding device, the guiding device comprising a guiding column (18) and a slider (21) to which the connecting element (26) is connected, which comprises a fluid transfer conduit (33), the beverage preparation machine (1) comprising a screen wall (20) arranged parallel to the front wall (15) and opposite the slot (16) and the slider (21) being mobile between the screen wall (20) and the front wall (15), **characterised in that** the guiding column (18) is placed behind the slot (16) and comprises the screen wall (20) which is arranged at a distance D from the front wall (15), the distance D being less than twenty millimetres (20mm), preferably less than ten millimetres (10mm) to prevent access physically and visually to the different members of the machine placed inside said frame.

2. Beverage preparation machine (1) according to claim 1, **characterised in that**, in a cross-section, the screen wall (20) has a width L1 and **in that** the slot (16) of the front wall (15) has a width L2, the width L1 being greater than the width L2.

3. Beverage preparation machine (1) according to claim 2, **characterised in that** the width L1 is greater than the width L2 of at least 10 millimetres (10mm).

4. Beverage preparation machine (1) according to any one of claims 1 to 3, **characterised in that** the screen wall (20) and the front wall (15) comprise a vertical symmetry plane (P1).

5. Beverage preparation machine (1) according to any one of claims 1 to 4, **characterised in that** the slider (21) comprises an internal cross-section adjusted to an external cross-section of the guiding column (18).

6. Beverage preparation machine (1) according to any one of claims 1 to 5, **characterised in that** the guiding column (18) comprises a cross-section having a semicircular portion.

7. Beverage preparation machine (1) according to any one of claims 1 to 6, **characterised in that** the fluid transfer conduit (33) comprises a portion which is arranged on the slider (21), in the upper part of it.

8. Beverage preparation machine (1) according to any one of claims 1 to 7, **characterised in that** the fluid transfer conduit (33) comprises a flexible portion arranged inside the frame (2).

9. Beverage preparation machine (1) according to any one of claims 1 to 8, **characterised in that** the frame (2) comprises a baseplate (3), the guiding column (18) directly coming from the baseplate (3).

10. Beverage preparation machine (1) according to any one of claims 1 to 9, **characterised in that** the dispensing head (17) comprises a rotary stirring device (27) comprising a rotary tool (30) about an axis (Z2), and intended to stir a preparation contained in a container (31) and a conduit (32) for conveying hot water and/or steam to the rotary tool (30), said conduit (32) for conveying hot water and/or steam being connected to the fluid transfer conduit (33).
